# EUROPEAN PATENT APPLICATION

(11) **EP 4 345 677 A1**
(43) Date of publication of application: **03.04.2024**
(21) Application number: 22199208.4
(22) Date of filing: 30.09.2022
(51) Int. Cl.: G06F 30/20, G06F 119/16, G06F 119/20

(54) **SYSTEM AND METHOD FOR MANAGING SIMULATION ARTIFACTS**

(71) Applicant: Siemens Aktiengesellschaft, 80333 München (DE)
(72) Inventor: B R, Chethan Ravi, 577134 Chickmagalur District, Karnataka (IN); CHAITANYA, O.V.R.Krishna, 560067 Bangalore, Karnataka (IN); PRAHARAJ, Amlan, 560100 Bangalore, Karnataka (IN); SINGAM, Srividhya, 518360 Kurnool District, Andhra Pradesh (IN); DALMIA, Aman, 700020 Kolkata, Kolkata (IN); SHUKLA, Shyam Sundar, 560100 Bangalore, Karnataka (IN); AMBATI, Niranjan, 560103 Bangalore, Karnataka (IN)
(74) Representative: Horn Kleimann Waitzhofer Schmid-Dreyer Patent- und Rechtsanwälte PartG mbB

(57) **Abstract**

A computer system and method for managing simulation artifacts is disclosed herein. The method comprises parsing at least one first workspace (122) associated with simulation of at least one first product to generate one or more first simulation artifacts. Further, at least one knowledge graph (302) is generated by mapping the one or more first simulation artifacts corresponding to the at least one first product to a predetermined ontology model. Further, a user's intent to modify at least one second simulation artifact in a second workspace (128) is captured based on interaction of the user with a simulation modelling user interface (118). The second workspace is associated with simulation of a second product. Further, one or more recommendations (255) for modifying the at least one second simulation artifact are generated, based on one or more properties of a contextually similar first simulation artifact, and displayed on the simulation modelling user interface (118).

## Description

### TECHNICAL FIELD

The present invention relates to data management, and in particular relates to a computer system and method for managing simulation artifacts.

### BACKGROUND

In any engineering organization, there are different levels of product design - from preliminary design to detailed design activities. During a preliminary or conceptual design activity, aspects such as geometry, boundary conditions and many engineering definitions are purely based on assumptions. When the products are multidisciplinary, cohesion between involved disciplines transition from a weak dependence during conceptual design stage to strong dependence during detailed design phase as more information emerges over different stages of the product design.

During design, simulation, and digital twin development, varied types of information are generated in varied formats. It is challenging to extract information available in the different formats and to fuse the extracted information to build a unified representation encompassing different aspects of simulation. Further, it is crucial for a designer to understand cohesion or dependency between different components of a product, while setting up or making changes to a simulation model of the product.

Further, in highly regulated industries, tests such as component testing and product testing are required to be done extensively. At present, component testing is being replaced partly by simulations to save on costs and time. For example, in aviation industry bird ingestion testing is done to simulate a bird-hit scenario. Traditionally, Original Equipment Manufacturers (OEMs) conduct such tests by physically damaging the airplane engine to mimic effects of damage from birds, hail, ice and sandstorms.

With the emergence of faster, more efficient simulation tools, OEMs have replaced 30 to 35% of the engine tests with simulations. However, validation of the engine test using simulation involves significant effort, especially when simulation model parameters and other relevant information are captured and stored in document format. In addition to the above, the test results and the simulation results must closely match to have maximum confidence on the simulation-based tests.

In light of the above, there exists a need for an improved system and method for managing simulation artifacts.

### SUMMARY

Variously disclosed embodiments comprise methods and computer systems that may be used to manage simulation artifacts.

According to a first aspect of the invention, a computer-implemented method of managing simulation artifacts may include parsing, by a processor, at least one first workspace associated with simulation of at least one first product to generate one or more first simulation artifacts corresponding to the at least one first product. The method further includes generating at least one knowledge graph by mapping the one or more first simulation artifacts corresponding to the at least one first product to a predetermined ontology model. The method further includes storing the generated the at least one knowledge graph in a graph database. The method further includes capturing a user's intent to modify at least one second simulation artifact in a second workspace based on interaction of the user with a simulation modelling user interface, wherein the second workspace is associated with simulation of a second product. The method further includes determining whether the at least one second simulation artifact is contextually similar to at least one first simulation artifact present in the at least one knowledge graph stored in the graph database. The method further includes generating one or more recommendations for modifying the at least one second simulation artifact based on one or more properties of the contextually similar first simulation artifact, if the at least one second simulation artifact is contextually similar to at least one first simulation artifact present in the at least one knowledge graph. The method further includes displaying the one or more recommendations on the simulation modelling user interface.

In an embodiment, the method may further include capturing the user's intent to search for at least one of the first simulations artifacts based on interactions of the user with the simulation modelling user interface. The method may further include querying the at least one knowledge graph based on the user's intent. The method may further include generating an output based on querying of the at least one knowledge graph. The method may further include displaying the generated output via the simulation modelling user interface to the user, wherein the generated output indicates the respective, searched first simulation artifact or the relationship of the respective, searched first simulation artifact to corresponding one or more dependent first simulation artifacts.

In a further embodiment, the method may further include capturing the user's intent to import the respective, searched first simulation artifact to the second workspace based on interaction of the user with the simulation modelling user interface, and importing the respective, searched first simulation artifact, in response to the captured user's intent, to the second workspace.

According to a second aspect of the invention, a computer system may be arranged and configured to execute the steps of the computer-implemented method according to the first aspect of the invention.

According to a third aspect of the invention, a computer program product may comprise computer program code which, when executed by the computer system according to the second aspect of the invention, causes the computer system to carry out the method according to the first aspect of the invention.

According to a fourth aspect of the invention, a computer-readable medium may comprise the computer program product according to the third aspect of the invention. By way of example, the described computer-readable medium may be non-transitory and may further be a software component on a storage device.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure.

Also, before undertaking the detailed description below, various definitions for certain words and phrases are provided throughout this patent document and those of ordinary skill in the art will understand that such definitions apply in many, if not most, instances to prior as well as future uses of such defined words and phrases. While some terms may comprise a wide variety of embodiments, the appended claims may expressly limit these terms to specific embodiments.

### BRIEF DESCRIPTION OF FIGURES

FIG 1 illustrates a functional block diagram of an example computer system or data processing system that facilitates management of simulation artifacts, in accordance with an embodiment of the present invention;
FIG 2 illustrates a functional block diagram indicating an exemplary workflow for managing simulation artifacts, in accordance with an embodiment of the present invention;
FIG 3A illustrates an example of a simulation modelling user interface displaying a dynamic representation of a knowledge graph, in accordance with an embodiment of the present invention;
FIG 3B shows the simulation modelling user interface displaying a cross section of a bolt assembly model;
FIG 3C shows a graphical user interface showing an example of a hierarchy subgraph associated with the knowledge graph;
FIG 3D shows a graphical user interface displaying an example of an interaction subgraph associated with the knowledge graph 302 corresponding to a bolt represented in the bolt assembly model;
FIG 3E shows an example of providing recommendations on the simulation modelling user interface, in accordance with an embodiment of the present invention;
FIG 4 shows a flowchart of a method for managing simulation artifacts, in accordance with an embodiment of the present invention; and
FIG 5 illustrates a block diagram of a data processing system, in accordance with an embodiment of the present invention.

### DETAILED DESCRIPTION

Various technologies that pertain to systems and methods for managing simulation artifacts will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present patent document will be described with reference to exemplary non-limiting embodiments.

In the present document, an approach is suggested to manage simulation artifacts for providing context-relevant recommendations for performing a simulation.

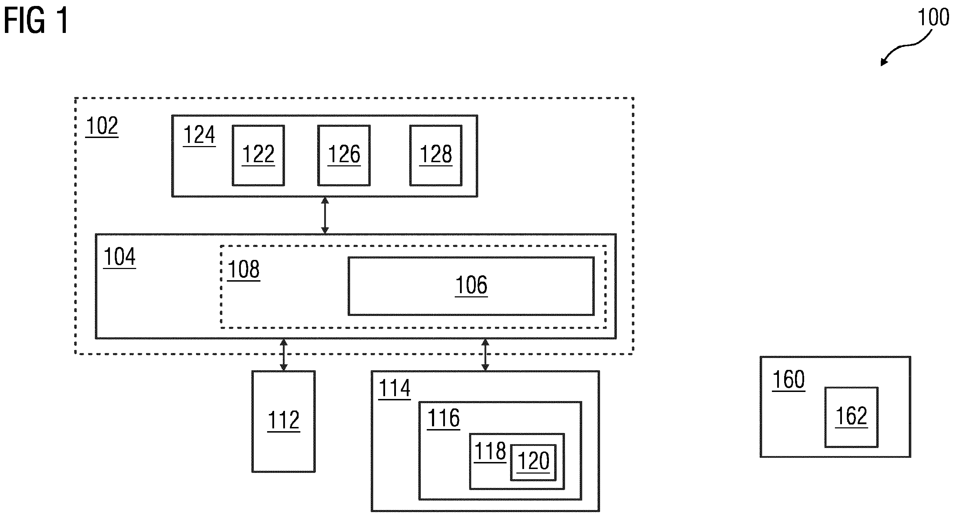

FIG 1 illustrates a functional block diagram of an example computer system or data processing system 100 that facilitates management of simulation artifacts, in accordance with an embodiment of the present invention.

The computer system 100 may include a simulation modelling platform 102 including at least one processor 104 that is configured to execute at least one artifact management module 106 from a memory 108 accessed by the processor 104. Herein, the simulation modelling platform 102 may include functionalities of configuring simulation models, modifying simulation parameters associated with the simulation models, generating simulation instances from the simulation models, and executing the simulation instances to generate simulation results. The artifact management module 106 may be configured (i.e., programmed) to cause the processor 104 to carry out various acts and functions described herein. For example, the described artifact management module 106 may include and/or correspond to one or more components of the simulation modelling platform 102 that is configured to generate and store simulation artifacts associated with a simulation project.

By way of example, the simulation modelling platform 102 may be cloud-based, internet-based and/or be operated by a provider providing simulation tools. The user may be located close to the simulation modelling platform 102 or remote to the simulation modelling platform 102, e.g., using a workstation for connecting to the simulation modelling platform 102, e.g., via the internet, wherein the workstation may include an input device 112 and a display device 114. In some examples, the simulation modelling platform 102 may be installed and run on a user's device, such as a computer, laptop, pad, on-premise computing facility, or the like.

Examples of product systems that may be adapted to include the simulation artifact management features described herein may include simulation tools such as Simcenter 3D, NX etc. of Siemens AG, Germany. However, it should be appreciated that the systems and methods described herein may be used in other product systems (e.g., product lifecycle management (PLM), product data management (PDM), application lifecycle management (ALM) systems) and/or any other type of system that generates a plurality of artifacts relevant for simulations.

It should be appreciated that it can be difficult and time-consuming to manage simulation artifacts from complex simulations involving multiple stakeholders and/or simulation tools, at different lifecycle stages of a product. For example, different steps such as computer-aided designing (CAD), finite element analysis (FEA), computational fluid dynamics (CFD), multibody dynamics (MDB), multi-physics simulation etc. may be performed at different stages of product design and development. The different stages may include, conceptual phase, detailed design phase, manufacturing phase, operational phase and maintenance phase. To enable the enhanced management of simulation artifacts, the described product system or computer system 100 may include the at least one input device 112 and the at least one display device 114 (such as a display screen).

The described processor 104 may be configured to generate a graphical user interface (GUI) 116 through the display device 114. Such a GUI 116 may include GUI elements such as buttons, links, search boxes, lists, text boxes, images, scroll bars usable by a user to provide inputs through the input device 112 required to perform simulations and/or to access simulation artifacts related to the simulation. By way of example, the GUI 116 may be a simulation modelling UI 118 provided to a user for providing inputs for configuring simulation models, and for initiating execution of simulations. Further, a recommendation UI 120 is provided within the simulation modelling UI 118 for enabling the user to view cohesive links corresponding to relevant physics models for simulation, interactions between different aspects of a multi-physics simulations. The cohesive links are displayed to the user as for example, recommendations, impact warnings etc. generated based on the user's interactions with the simulation modelling UI 118. The term 'cohesive links' or simply 'cohesion' as used herein refers to non-tangible links signifying cause-effect relationship between artifacts. The cohesive links indicate, for example, downstream impact of changes to one or more simulation artifacts and recommendations to mitigate the impact.

The term 'simulation artifact' as used herein may include data objects that represent different elements including, but not limited to, geometric features, boundary conditions, loads, materials, mesh/grid elements, mesh volume, analysis steps, post processing steps, pre-processing steps, simulation results, quantitative metrics for simulation model quality, storage location, project name, names or profiles of users involved in the simulation, user-defined annotations related to best practices and file paths to relevant documentation. Hereinafter, the term user and designer may be used interchangeably to refer to an individual who is carrying out a specific simulation project.

In an embodiment, the artifact management module 106 and/or the processor 104 may be configured to parse at least one first workspace 122 associated with simulation of at least one first product to generate one or more first simulation artifacts corresponding to the at least one first product. The term 'first workspace' as used herein refers to a file directory that comprises various files or resources required for performing simulations of a first product. The first workspace 122 may be stored in a data store 124 associated with the computer system 100. The first product may be a single component or a group of components that interact with each other in a predetermined manner. As used herein, the term 'product' may refer to hardware products, software products or a combination thereof. Non-limiting examples of products may include, Computerized Numerical Control machines, pumps, motors, drives, special purpose machines, gas turbines, embedded systems, industrial equipment, healthcare equipment, automation scripts, application code bases etc.

In an embodiment, parsing of the at least one first workspace 122 to generate the one or more first simulation artifacts comprises parsing one or more source files obtained from a set of source files, stored in the at least one first workspace 122. In a preferred embodiment, the set of source files comprise design files, data files, simulation files, simulation output files, finite element mesh files and PLM files associated with the at least one first product. More specifically, each of the one or more source files may be associated with different lifecycle stages of the at least one first product.

A design file may be, for example, a geometry file that comprises geometric features of a product. The geometric features may include geometric dimension and tolerancing, topology, geometric models, type of geometric model (2D, 3D etc.), configuration data, colours, shapes, layers, design intent, etc. For example, in tools such as NX the design files may include file formats such as PRT, JT, IGES, DXF, DWG, STEP, Solid Edge, Parasolid and PLMXML. A simulation file includes process parameters and configurations associated with a simulation. The input data and/or output data associated with a simulation may be in the form of data files. A finite element mesh file may include mesh control parameters such as mesh element sizes, mesh element volume, mesh element growth ratio etc. PLM files are files in the PLM XML format that include XML schema corresponding to a generalized data model in a framework focused on product lifecycle data. PLM XML supports both configured product structure, as required for computer-aided design (CAD) and visualization applications and bill of material (BOM) exchange, and unconfigured product structure, as required for the exchange of more complex data by product data management (PDM) systems. PLM files also provides support for representing construction geometry. The construction geometry may include the point representing the center of gravity of a part, or a set of sample points to use for checking the fidelity of a model after it has been imported into a different system. Further, XML schema also includes attributes indicative of feature hierarchy (i.e., hierarchy of subassemblies in the product) and statuses.

Non-limiting examples of source file extensions include *.bkm, *.igs, *iges, *.sat, *.stp, *.step, *.stl, *.x_b, *.x_t, *.plmxml, *.model, *.jt, *.xgl, *.catpart, *.pdf, *.u3d, *.sim, *.afm etc. In addition, user defined features or annotations are also provided in a UDF format, i.e., through a file with file extension *.udf.

The one or more source files are stored in the file directory associated with the first workspace 122. In an implementation, the parsing of the first workspace 122 may be initiated by a user of the computer system 100, by choosing a 'Generate graph' option provided on the GUI 116. Further, the user may provide an input to the GUI 116 indicative of a path corresponding to the first workspace 122, in order to initiate parsing of the first workspace 122. The user may also be provided an option to select a subset of the source files present in the file directory, in place of selecting all the source files present associated with the first workspace 122.

In an embodiment, parsing of the one or more source files is performed using an application programming interface. In an example, at least one of the source files may comprise structured data. The application programming interface may parse the source file by extracting the structured data based on a predefined schema model. For example, the position of specific data within a given source file may be identified based on certain demarcations. The demarcations may be in the form of specific keywords or operators. For example, the use of operators "//" may indicate presence of a designer's comments. In another example, the keywords like 'input', 'output' may also act as demarcations. Further, based on the corresponding field, the extracted data is mapped to the schema model, using an Application Programming Interface. The schema model arranges the extracted data in the form of schema objects. Each of the schema objects correspond to a predefined object type. In an example, different users may prefer different terminologies for the same simulation artifact. For example, a simulation artifact referred to as 'contact force' by one designer may be referred to as 'force' by another designer. In this case, both 'contact force' and 'force' may be mapped to the same schema object in the schema model.

In another example, at least one of the source files may comprise unstructured data in the form of text, images, charts etc. Such source files may be parsed, by the application programming interface, using various techniques available in the art. The techniques for parsing unstructured data may include, but are not limited to, optical character recognition, natural language processing, object detection using convolutional neural networks etc.

The artifact management module 106 and/or the processor 104 may be further configured to generate at least one knowledge graph by mapping each of the one or more first simulation artifacts corresponding to the at least one first product, to a predetermined ontology model. In an embodiment, the ontology model may be provided as an input to the computer system 100 in the form of an ontology file. For example, the ontology file may be stored along with the one or more source files in the first workspace 122. In another embodiment, the ontology file is stored in the data store 124. In an example, different ontology models may be predefined for different products. For example, ontology model for a bolt may be different from the ontology model for a cutting tool. The ontology model for a bolt may relate parameters such as bolt preload and von Mises stress at the bolt head, whereas the ontology model for the cutting tool may relate parameters such as speed and stiffness associated with the cutting tool. The user may select an ontology file from among a plurality of ontology files stored in the data store 124 via the GUI 114.

The ontology model is indicative of relationships present between the first simulation artifacts. For example, if changes in a simulation artifact, say "diameter", impacts a second simulation artifact "bolt preload", then the simulation artifact "bolt preload" may be dependent on the simulation artifact "diameter", thereby sharing a parent-child relationship. It is also possible that changes in a simulation artifact may not affect or induce changes in other simulation artifacts. Therefore, each one of the first simulation artifacts may or may not have dependent first simulation artifacts. The ontology model includes nodes corresponding to different object types corresponding to simulation artifacts and links that show presence of relationships between object types.

In an embodiment, mapping of the one or more first simulation artifacts to the predetermined ontology model comprises identifying an object type associated with the first simulation artifact. Further, the first simulation artifact is mapped to a node in the ontology model corresponding to the object type identified. More specifically, instances or values of each of the first simulation artifacts is mapped to respective nodes in the ontology model.

Further, triples are generated based on relationships between the mapped first simulated artifacts in the ontology model using a predefined library. An example of a predefined library used for generation of the triples is a Web Ontology Language (OWL) library. The triples are further stored as a knowledge graph in a graph database 126. Non-limiting examples of graph databases include GraphDB, MongoDB and DataStax. In an embodiment, the graph database 126 may be part of the data store 124 associated with the computer system 100. The term 'triple' as used herein refers to a set of three entities that codifies a statement about the mapped first simulation artifacts in the form of subject-predicate-object expressions. An example of a triple is (parameter_a, inversely proportional, parameter_b) which links a parameter 'a' to another parameter 'b' associated with geometric configuration of the first product. Further, the at least one knowledge graph is generated based on the triples computed.

The knowledge graph is a graph structure defined by nodes, edges and properties, wherein two nodes linked by an edge represent the subject and the predicate that are related by a certain property (i.e., predicate). In implementation, the knowledge graph is based on Resource Description Framework (RDF) format.

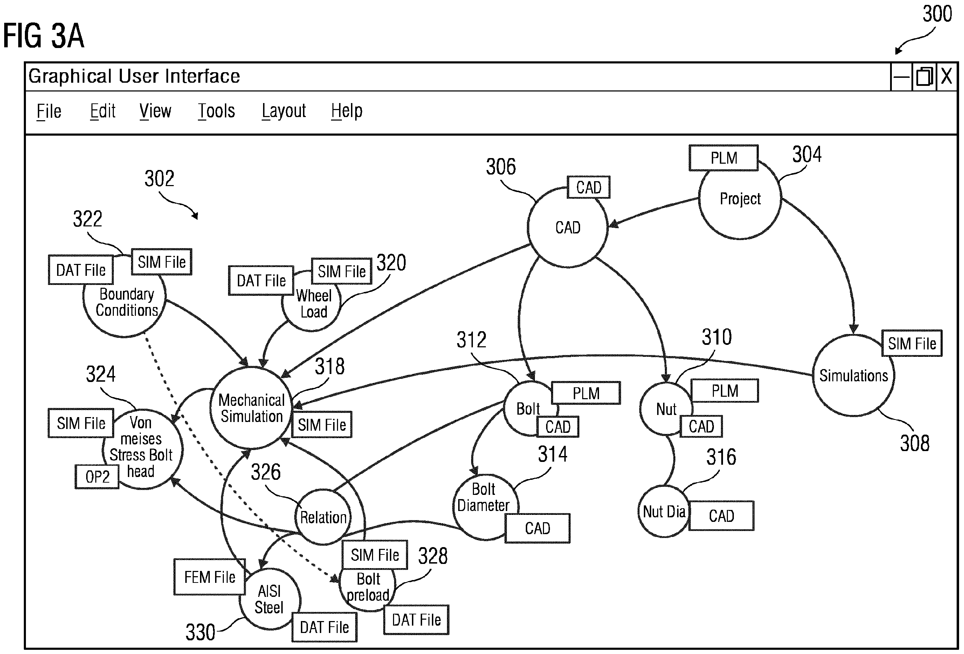

The at least one knowledge graph thus generated comprises at least one first hierarchy subgraph and at least one first interaction subgraph. The first hierarchy subgraph provides a hierarchical representation of the first workspace 122, and the first interaction subgraph represents interactions between two or more components of the first product. The term 'hierarchy subgraph' as used herein refers to a section of the knowledge graph that represents hierarchy of a product and assemblies corresponding to one or more components of the product. For example, the bolt present in a motor may be differentiated from bolt present in a transformer based on a hierarchical position of bolt within hierarchy subgraphs corresponding to the motor and the transformer. The term 'interaction subgraph' as used herein refers to a portion of the knowledge graph that relates assemblies associated with components of a product based on contact definitions such as boundary conditions, loads, stress, etc. In an embodiment, the first hierarchy subgraph and the first interaction subgraph are vectorized during generation of the knowledge graph by applying a suitable vectorization function such as Graph2Vec. Further, a lookup table may be generated based on vectorized forms, i.e., embeddings of each of the first hierarchy subgraphs and the first interaction subgraphs present in the at least one knowledge graph. The look up table may be stored in the data store 124.An example of a knowledge graph storing simulation artifacts related to a bolt assembly model is explained later with reference to FIGS 3A-3D.

It must be understood by a person skilled in the art that the present invention may be extended to any number of simulations. For example, n knowledge graphs related to n first workspaces may be generated and stored in the graph database 126 in a similar fashion as explained above.

The artifact management module 106 and/or the processor 104 is further configured to capture a user's intent to modify at least one second simulation artifact in a second workspace 128 based on interaction of the user with a simulation modelling user interface 118. The second workspace 128 corresponds to simulation of a second product. The user's intent may be captured by identifying one or more actions performed by the user on the simulation modelling UI 118 during, for example, setting up of the simulation project. In an example, the user may perform one or more actions on the simulation modelling UI 118 to modify certain elements associated with a model of the second product. Non-limiting examples of the one or more actions indicative of user's intent include dragging, dropping, pinching, single-clicking, double-clicking, rotating, aligning etc. For example, if the simulation corresponds to detailed design of a bolt, the user may increase or decrease diameter of the bolt by, for example, dragging a portion on the simulation modelling UI 118 that represents a cross-section of the bolt, or by entering a new value for the diameter in a specific data field. Here, the user's intent is to modify diameter of the bolt. In other words, actions of the user on the simulation modelling UI 118 are indicative of the user's intent.

The artifact management module 106 and/or the processor 104 is further configured to determining whether the at least one second simulation artifact is contextually similar to at least one first simulation artifact present in the at least one knowledge graph stored in the graph database 126. In an embodiment, contextual similarity of the at least one second simulation artifact to the at least one first simulation artifact present in the at least one knowledge graph is determined by firstly, parsing the second workspace 128 to generate a second hierarchy subgraph and a second interaction subgraph. The process of generating the second hierarchy subgraph and the second interaction subgraph is similar to the process of generating the knowledge as explained earlier. The parsing of the second workspace 128 comprises parsing of design files, simulation files, geometry files etc. The parsing of the second workspace 128 results in a plurality of second simulation artifacts. Further, each of the second simulation artifacts is mapped to a predetermined ontology model to generate the second hierarchy subgraph and the second interaction subgraph. In an example, the mapping of the second simulation artifacts is based on corresponding object types associated with the second simulation artifacts.

Further, the second hierarchy subgraph and the second interaction subgraph are vectorized by applying a predefined vectorization function, to generate a hierarchy embedding and an interaction embedding respectively. In an example, Graph2Vec function in Python may be used for vectorizing the subgraphs. Further, the hierarchy embedding, and the interaction embedding are compared respectively to embeddings of the at least one first hierarchy subgraph and the at least one first interaction subgraph, using a similarity checking algorithm. In the embodiment, embeddings of the at least one first hierarchy subgraph and the at least one first interaction subgraph are generated by applying a vectorization function and made readily available in the data store 124.

The similarity checking algorithm may compute a similarity value for any given pair of embeddings. In an embodiment, the similarity checking algorithm is based on cosine similarity. In cosine similarity, a similarity value of 1 indicates maximum similarity and 0 indicates no similarity. In an implementation, the artifact management model 106 and/or the processor 104 may be configured such that if the similarity value is greater than a predefined threshold, the embeddings are treated as similar. For example, if the similarity value for a pair of embeddings is greater than 0.8, an output of the similarity checking algorithm may indicate that the embeddings are similar. In another embodiment, the similarity checking algorithm is based on Siamese networks. In case there are a plurality of knowledge graphs corresponding to a plurality of workspaces, the artifact management module 106 compares the second hierarchy embedding and the second interaction embedding to respective embeddings corresponding to each of the knowledge graphs among the plurality of knowledge graphs.

The artifact management module 106 and/or the processor 104 is further configured to generate one or more recommendations for modifying the at least one second simulation artifact based on one or more properties of a contextually similar first simulation artifact, if the at least one second simulation artifact is contextually similar to at least one first simulation artifact present in the at least one knowledge graph. In the present embodiment, the one or more properties include nature of relationship between the contextually similar first simulation artifact to one or more other first simulation artifacts in the at least one knowledge graph.

In an embodiment, generating the one or more recommendations includes identifying, from the at least one knowledge graph, one or more first simulation artifacts dependent on the contextually similar first simulation artifact. For example, the one or more dependent first simulation artifacts are identified from the triples, where the contextually similar first simulation artifact is a subject and the dependent first simulation artifact is an object.

Further, a cohesion value for a relationship between the contextually similar first simulation artifact to each of the one or more dependent first simulation artifacts is determined based on at least one of a context and a source associated with the dependent first simulation artifact. Herein the term 'context' refers to one or more attributes corresponding to the contextually similar first simulation artifact and the one or more dependent first simulation artifacts. For example, the attributes may include a corresponding hierarchical level of the first simulation artifact in the knowledge graph, value or data type corresponding to the first simulation artifact etc.

The term 'source' refers to a source that defines the relationship of the dependent first simulation artifact to the contextually similar first simulation artifact. For example, the source may be a user or a simulation outcome. The cohesion value may be a numeric value that quantifies a degree of confidence on the relationship between the related first simulation artifacts. For example, the cohesion value may be a binary value or a non-binary value. In an example, the cohesion value may be determined to be 0.5 if relationship is inferred based on a simulation outcome, and 1 if the relationship is user-defined, or based on user-defined functions. In another example, the cohesion value may be determined based on the similarity value computed by the similarity checking algorithm. In yet another example, the cohesion value may be determined using a predefined logic based on both the source and the context.

The one or more recommendations 255 are further generated based on the relationship between the at least one first simulation artifact to each of the one or more dependent first simulation artifacts, and the cohesion value associated with the relationship. In an embodiment, the one or more recommendations 255 may include user annotations, functions and expressions stored corresponding to the contextually similar first simulation artifact. The term 'user annotations' as used herein may refer to rules of thumb or conventional knowledge of relationship between parameters associated with the product, reasoning for design or simulation choices made.

The artifact management module 106 and/or the processor 104 is further configured to display the one or more recommendations on the simulation modelling UI 118. In an embodiment, displaying the one or more recommendations 255 on the simulation modelling UI 118 comprises rendering a dynamic representation of at least one portion of the at least one knowledge graph 302 highlighting a dependency between the contextually similar first simulation artifact and the one or more dependent first simulation artifacts.

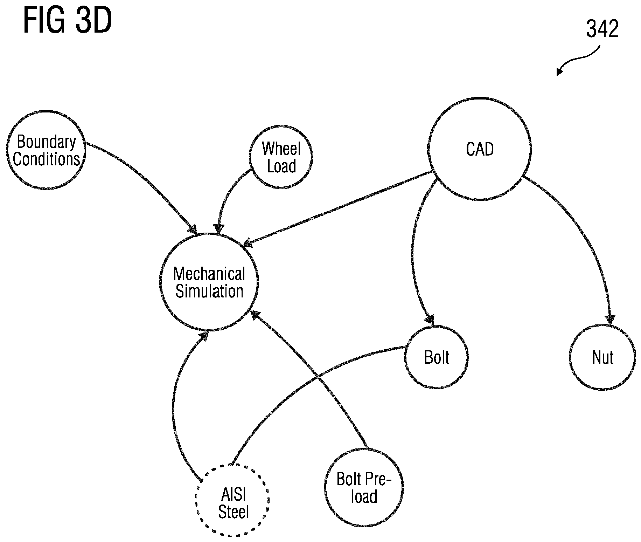

Further, the one or more recommendations 255 corresponding to the dependency between the contextually similar first simulation artifact and the one or more dependent first simulation artifacts overlaid on the dynamic representation of the at least one portion of the at least one knowledge graph. An example of displaying the one or more recommendations 255 on the simulation modelling UI 118 is explained later with reference to FIG 3D.

In an embodiment, the artifact management module 106 and/or the processor 104 is further configured to provide a search UI (not shown) within the simulation modelling UI. The user may input or type in a semantic query in the search UI to search for one or more first simulation artifacts stored in the graph database 126. Further, the at least one knowledge graph in the graph database 126 is queried based on the semantic query received from the user. In an implementation, the knowledge graph is queried using SPARQL. SPARQL is a semantic query language that facilitates querying and manipulation of data stored in the knowledge graph. Further, an output is generated based on querying of the knowledge graph. The generated output is displayed via the simulation modelling UI 118 to the user. The generated output indicates the respective, searched first simulation artifact or the relationship of the respective, searched first simulation artifact to corresponding one or more dependent first simulation artifacts. For example, if the semantic query corresponds to 'Bolt', the at least one knowledge graph is queried to identify nodes that correspond to first simulation artifacts related to a bolt. In an example, the first simulation artifact related to the bolt is identified based on presence of the keyword 'bolt' within the simulation artifact.

In another embodiment, the artifact management module 106 and/or the processor 104 is configured to provide a dynamic representation of the at least one knowledge graph on the simulation modelling UI 118. The user may interact with the simulation modelling UI 118 to traverse the at least one knowledge graph.

For example, the user may select, for example, by double-click on dynamic representation of a specific node in the knowledge graph to view details associated with the respective simulation artifact.

In an embodiment, the artifact management module 106 and/or the processor 104 is configured to capture the user's intent to import the respective, searched first simulation artifact to the second workspace 128 based on interactions of the user with the simulation modelling UI 118. For example, the user may want to reuse or copy an existing first simulation artifact to the second workspace 128. This may facilitate faster setting up of simulations in the second workspace 128, especially for novice, since a large variety of existing first simulation artifacts may be available for reuse.

Available first simulation artifacts may then be displayed to the user via the search UI for selection and the user may select one of the displayed first simulation artifacts for import to the second workspace 128. In some examples, all the available first simulation artifacts may be displayed to the user via the search UI for selection and the user may select one of the displayed first simulation artifacts for importing into the second workspace 128. By way of example, the import may be done by "drag and drop" or by a "dropdown" window in the simulation modelling UI 118. For the import of the respective simulation artifact, the respective simulation artifact may be copied to the simulation modelling UI 118.

The respective, searched first simulation artifact is further imported, in response to the captured user's intent, to the second workspace 128.In some examples, the import of the respective simulation artifact may comprise importing metadata of the respective simulation artifact as explained in more detail below. Such metadata may comprise information on the source of the simulation artifact, such as the respective source file, creator of the simulation artifact, date of creation, debugging history, machines or devices used for creating the simulation artifact etc. In some examples, the mentioned metadata may comprise information on the type and/or format of the respective simulation artifact, in the form of integers, decimal numbers, text strings, Boolean data, etc.

As mentioned above, the simulation modelling platform 102 may comprise the above-described functionalities and may provide an interactive user interface of the simulation modelling platform 102 which supports and enables the user to manage simulation artifacts.

In some examples, the artifact management module 106 and/or the processor 104 may further be configured to use the user's input provided by his/her interactions with the simulation modelling UI 118 and the imported simulation artifacts for setting up or modifying simulation models associated with the second workspace 128.

Further, a computer-readable medium 160 which may comprise a computer program product 162 is shown in FIG 1, wherein the computer program product 162 may be encoded with executable instructions, that when executed, cause the computer system 100 or and/or the simulation modelling platform 102 to carry out the described method.

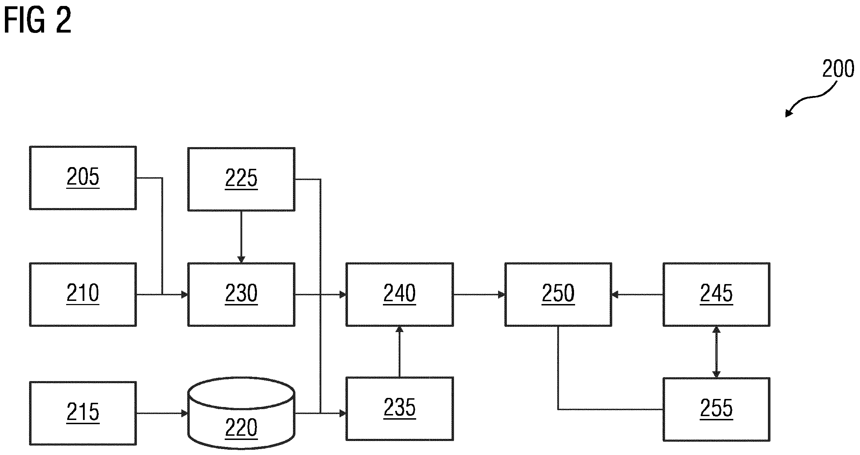

FIG 2 illustrates a functional block diagram indicating an exemplary workflow 200 for managing simulation artifacts, in accordance with an embodiment of the present invention.

The workflow 200 starts with parsing of simulation files 205 and design & geometry files 210 corresponding to a first product in a first workspace. The simulation files 205 and the design & geometry files 210 are parsed to generate first simulation artifacts corresponding to the first product. Further, expert knowledge 215 captured in the form actions of a user in the first workspace 122, such as simulation parameter settings, common workflows, user-defined annotations and rules of thumb corresponding to the first workspace 122 are also obtained from a user action database 220. Further, an ontology module 225 maps simulation artifacts 230 obtained from simulation files 205 and design & geometry files 210, and simulation artifacts 235 corresponding to the respective expert knowledge obtained from the user action database 220 to an ontology model, to generate a knowledge graph 240. Further, a user's intent 245 is identified based on interactions of a user with a simulation modelling UI associated with a second workspace 128. Further, a similarity checking algorithm 250 estimates the contextual similarity between the second workspace 128 and the first workspace 122 by comparing hierarchy subgraph and interaction subgraph of the first workspace 122 to hierarchy subgraph and interaction subgraph, respectively, of the second workspace. Based on the similarity, recommendations 255 are generated and displayed to the user via the simulation modelling UI.

FIG 3A illustrates an example of a simulation modelling UI 300 displaying a dynamic representation of a knowledge graph 302, in accordance with an embodiment of the present invention.

The knowledge graph 302 comprises a plurality of nodes 304, 306...330 interconnected using edges (indicated by the connecting arrows). Each of the nodes indicate a simulation artifact associated with a first workspace. Each of the edges indicate parent-child relationships between respective nodes. The origin of an arrow indicates a parent node and the node connected to the head of the arrow indicates a child node of the parent node. The child nodes are impacted by modifications in respective parent nodes. The user may click or zoom in on a specific node to view details associated with the respective simulation artifact. In the present embodiment, a source associated with each of the simulation artifacts is also indicated, alongside respective nodes. For example, node 306 is a CAD file, node 318 is a simulation file with .SIM extension, etc.

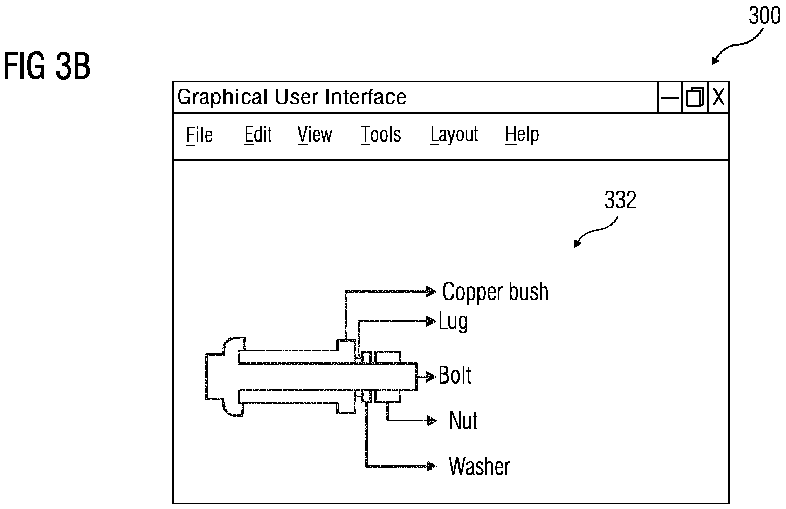

In the present example, the knowledge graph 302 comprises simulation artifacts related to design and simulation of a bolt assembly model 332 corresponding to a bolt assembly used for connecting electrical wires. FIG 3B shows the simulation modelling UI 300 displaying a cross section of the bolt assembly model 332. The bolt assembly comprises different components such as a bolt, a nut, a washer, a lug, a web, electrical wire connection etc. as indicated in the bolt assembly model 304.

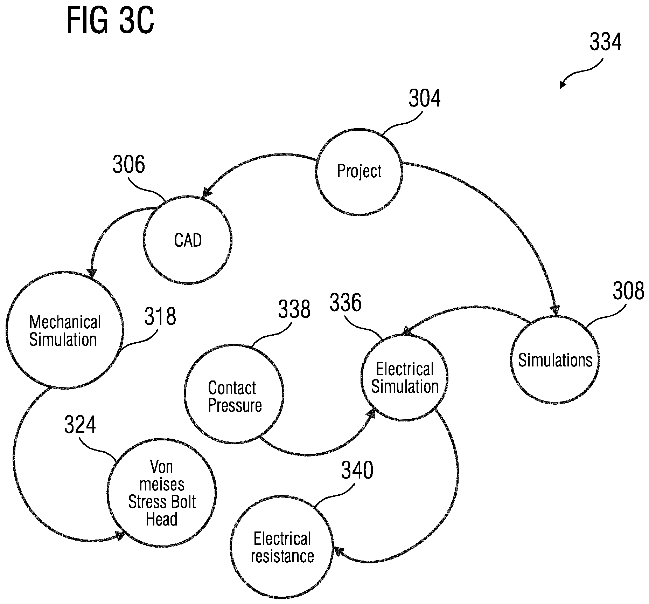

FIG 3C shows a graphical user interface 334 showing an example of a hierarchy subgraph associated with the knowledge graph 302. The hierarchy subgraph provides a hierarchical representation of simulation artifacts associated with the simulation project. In the present example, the hierarchy subgraph comprises a root node 'Project' 304 for the simulation project, at a first level. Further, at a second level, the node 'Project' 304 has two child nodes, 'CAD' 306 and 'simulations' 308, which indicate that the simulation project consists of two main tasks, CAD-based designing and simulations respectively. At a third level, the node 'CAD' 306 has a child node, 'mechanical simulation' 318, which has a further child node 'von Mises stress bolt head' 324 indicating that a mechanical simulation for von Mises stress at a bolt head was performed. At the third level, the node 'simulations' 308 has a child node, 'electrical simulations' 336 which has further child nodes, 'contact pressure' 338 and 'electrical resistance' 340. The child nodes 'contact pressure' 338 and 'electrical resistance' 340 indicate that electrical simulations corresponding to contact pressure and electrical resistance were performed in the first workspace.

FIG 3D shows a graphical user interface 342 displaying an example of an interaction subgraph associated with the knowledge graph 302 corresponding to the bolt. The interaction subgraph comprises nodes that indicate physics of interaction between subassemblies of the product. In the present example, the physics of interaction may be defined by boundary conditions, wheel load, bolt load, stress, material information etc. associated with the bolt.

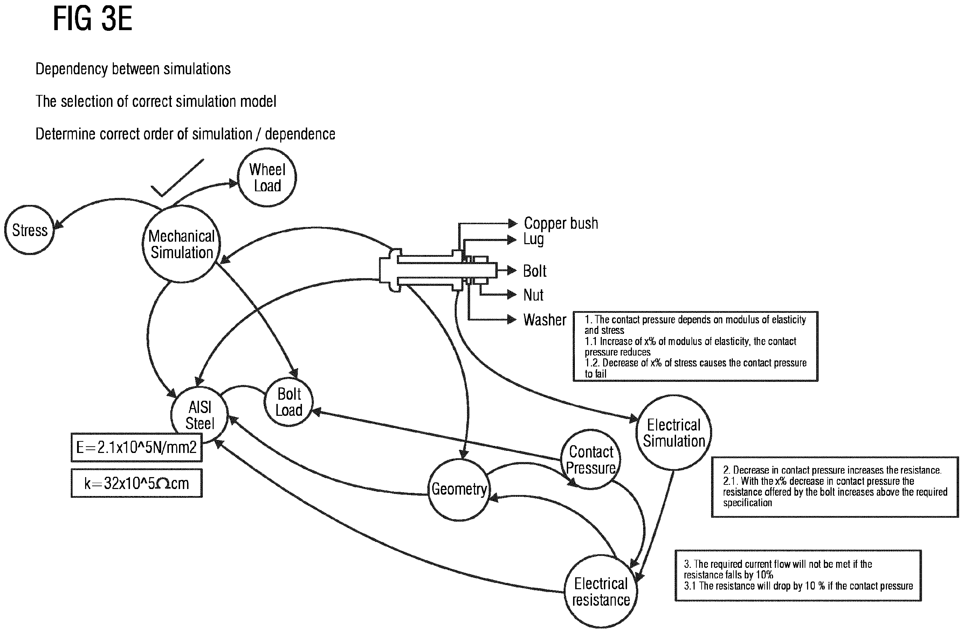

FIG 3E shows an example of providing recommendations on the simulation modelling UI 300, in accordance with an embodiment of the present invention. The recommendations 255 are provided based on dependence of a simulation artifact that is being modified on one or more other simulation artifacts. Here, the material of the bolt may be modified by the user during design of the bolt assembly model. For example, the material may be changed from AISI steel to aluminum. The recommendations 255 are further generated based on hierarchy subgraph and interaction graph associated with the node corresponding to material of the bolt. Here, the recommendations 255 are provided in line with highlighted relationships between one or more simulation artifacts that are impacted by changes in the material. In the present example, value of bolt preload is affected by change in the material. The change in bolt preload further impacts contact pressure which in turn affects the electrical resistance associated with the bolt assembly model.

A dynamic representation of a portion of the knowledge graph 302 highlighting the nodes (i.e., simulation artifacts) that are affected by changes in the material of the bolt is rendered on the simulation modelling UI, overlaid on a section of the UI where the user is working on the simulation model associated with a second product. Here also, the simulation model corresponds to a bolt assembly model.

The links 1, 2 and 3 that relate bolt preload to contact pressure, contact pressure to electrical resistance and electrical simulation to electrical simulation respectively are highlighted. The links may be highlighted, for example using green, orange and orange colours 1, 2 and 3 respectively. The recommendations 255 corresponding to each of the links 1, 2 and 3 are further highlighted in boxes of the respective colours, for enabling the user to visually relate the links being affected and possible consequences from modifying the material of the bolt.

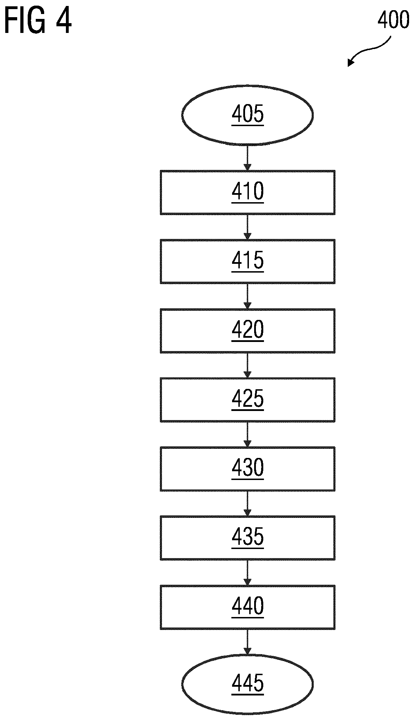

FIG 4 shows a flowchart of a method 400 for managing simulation artifacts, in accordance with an embodiment of the present invention. The method may start at 405 and the methodology may comprise several method steps carried out through operation of at least one processor similar to the processor 104.

At step 410, at least one first workspace 122 associated with simulation of at least one first product is parsed to generate one or more first simulation artifacts corresponding to the at least one first product.

At step 415, at least one knowledge graph 302 is generated by mapping the one or more first simulation artifacts corresponding to the at least one first product to a predetermined ontology model.

At step 420, the generated at least one knowledge graph 302 is stored in a graph database.

At step 425, a user's intent to modify at least one second simulation artifact in a second workspace 128 is captured based on interactions of the user with a simulation modelling UI. The second workspace 128 is associated with simulation of a second product.

At step 430, it is determined whether the at least one second simulation artifact is contextually similar to at least one first simulation artifact present in the knowledge graph 302 stored in the graph database.

At step 435, if the at least one second simulation artifact is contextually similar to at least one first simulation artifact present in the knowledge graph, one or more recommendations 255 are generated for modifying the at least one second simulation artifact based on one or more properties of the contextually similar first simulation artifact.

At step 440, the one or more recommendations 255 are displayed on the simulation modelling UI.

At 445, the methodology may end.

It should further be appreciated that the methodology 400 may comprise other acts and features discussed previously with respect to the computer-implemented method of managing simulation artifacts.

For example, the method may further comprise the acts of capturing the user's intent to search for at least one of the first simulations artifacts based on interactions of the user with the simulation modelling user interface; of querying the at least one knowledge graph based on the user's intent; of generating an output based on querying of the at least one knowledge graph; and of displaying the generated output via the simulation modelling user interface to the user, wherein the generated output indicates the respective, searched first simulation artifact or the relation-ship of the respective, searched first simulation artifact to corresponding one or more dependent first simulation artifacts.

In some examples, the methodology may further comprise the act of capturing the user's intent to import the respective, searched first simulation artifact to the second workspace 128 based on interaction of the user with the simulation modelling user interface 118; and of importing the respective, searched first simulation artifact, in response to the captured user's intent, to the second workspace.

As discussed previously, acts associated with these methodologies (other than any described manual acts such as an act of manually making a selection through the input device 112) may be carried out by one or more processors. Such processor(s) may be included in one or more data processing systems, for example, that execute software components operative to cause these acts to be carried out by the one or more processors. In an example embodiment, such software components may comprise computer-executable instructions corresponding to a routine, a sub-routine, programs, applications, modules, libraries, a thread of execution, and/or the like. Further, it should be appreciated that software components may be written in and/or produced by software environments/languages/frameworks such as Java, JavaScript, Python, C, C#, C++ or any other software tool capable of producing components and graphical user interfaces configured to carry out the acts and features described herein.

The suggested approach offers several advantages over other approaches. E.g., the suggested approach helps with improving traceability of simulation artifacts.

The present invention facilitates prediction of dependencies between various simulation artifacts associated with simulation of a product, based on pre-existing simulation artifacts, with the help of knowledge graphs. Further, the present invention also assists the user in setting up simulation models by providing an intuitive understanding of simulation artifacts and impact of modification of the simulation artifacts on one or more other simulation artifacts, through dynamic representation of relevant portion of the knowledge graph. As a result, the user may easily identify discrepancies during setting up of the simulation. It also enables reuse of simulation artifacts such as past simulation parameter settings and pre-processing steps, thereby reducing manual efforts in setting up of a simulation.

The present invention provides recommendations based on relationships between pre-existing artifacts and a cohesion value associated with the relationship, only if the recommendations are relevant to the specific context of the product.

Further, the knowledge graph-based approach improves traceability of simulation artifacts without the need for extensive manual searching. As a result, the suggested approach allows rapid look-ups for simulation artifacts that may not be easily performed using existing art. Further, the suggested approach also helps in ensuring that requirements are fulfilled when setting up or modifying a simulation model.

The use of knowledge graphs for managing simulation artifacts also helps in reducing risk of knowledge loss with change in human resources employed to development of the product.

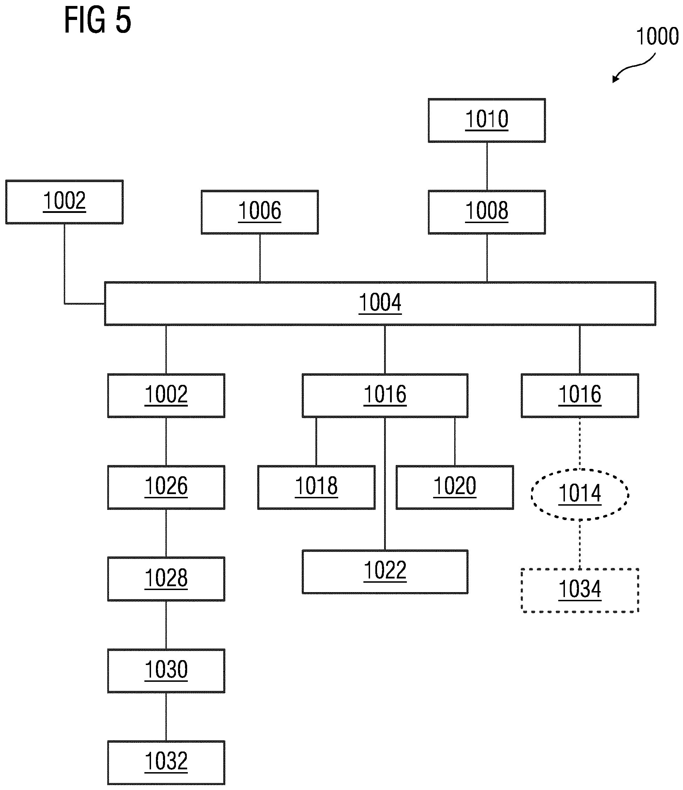

FIG 5 illustrates a block diagram of a data processing system 1000 (also referred to as a computer system) in which an embodiment can be implemented, for example, as a portion of a product system, and/or other system operatively configured by software or otherwise to perform the processes as described herein. The data processing system 1000 may include, for example, the simulation modelling platform 102 and/or the computer system or data processing system 100 mentioned above. The data processing system depicted includes at least one processor 1002 (e.g., a CPU) that may be connected to one or more bridges/controllers/buses 1004 (e.g., a north bridge, a south bridge). One of the buses 1004, for example, may include one or more I/O buses such as a PCI Express bus. Also connected to various buses in the depicted example may include a main memory 1006 (RAM) and a graphics controller 1008. The graphics controller 1008 may be connected to one or more display devices 1010. It should also be noted that in some embodiments one or more controllers (e.g., graphics, south bridge) may be integrated with the CPU (on the same chip or die). Examples of CPU architectures include IA-32, x86-64, and ARM processor architectures.

Other peripherals connected to one or more buses may include communication controllers 1012 (Ethernet controllers, Wi-Fi controllers, cellular controllers) operative to connect to a local area network (LAN), Wide Area Network (WAN), a cellular network, and/or other wired or wireless networks 1014 or communication equipment.

Further components connected to various buses may include one or more I/O controllers 1016 such as USB controllers, Bluetooth controllers, and/or dedicated audio controllers (connected to speakers and/or microphones). It should also be appreciated that various peripherals may be connected to the I/O controller(s) (via various ports and connections) including input devices 1018 (e.g., keyboard, mouse, pointer, touch screen, touch pad, drawing tablet, trackball, buttons, keypad, game controller, gamepad, camera, microphone, scanners, motion sensing devices that capture motion gestures), output devices 1020 (e.g., printers, speakers) or any other type of device that is operative to provide inputs to or receive outputs from the data processing system. Also, it should be appreciated that many devices referred to as input devices or output devices may both provide inputs and receive outputs of communications with the data processing system. For example, the processor 1002 may be integrated into a housing (such as a tablet) that includes a touch screen that serves as both an input device and a display device. Further, it should be appreciated that some input devices (such as a laptop) may include a plurality of different types of input devices (e.g., touch screen, touch pad, keyboard). Also, it should be appreciated that other peripheral hardware 1022 connected to the I/O controllers 1016 may include any type of device, machine, or component that is configured to communicate with a data processing system.

Additional components connected to various busses may include one or more storage controllers 1024 (e.g., SATA). A storage controller may be connected to a storage device 1026 such as one or more storage drives and/or any associated removable media, which can be any suitable non-transitory machine usable or machine-readable storage medium. Examples include nonvolatile devices, volatile devices, read only devices, writable devices, ROMs, EPROMs, magnetic tape storage, floppy disk drives, hard disk drives, solid-state drives (SSDs), flash memory, optical disk drives (CDs, DVDs, Blu-ray), and other known optical, electrical, or magnetic storage devices drives and/or computer media. Also, in some examples, a storage device such as an SSD may be connected directly to an I/O bus 1004 such as a PCI Express bus.

A data processing system 1000 in accordance with an embodiment of the present disclosure may include an operating system 1028, software/firmware 1030, and data stores 1032 (that may be stored on a storage device 1026 and/or the memory 1006). Such an operating system may employ a command line interface (CLI) shell and/or a graphical user interface (GUI) shell. The GUI shell permits multiple display windows to be presented in the graphical user interface simultaneously, with each display window providing an interface to a different application or to a different instance of the same application. A cursor or pointer in the graphical user interface may be manipulated by a user through a pointing device such as a mouse or touch screen. The position of the cursor/pointer may be changed and/or an event, such as clicking a mouse button or touching a touch screen, may be generated to actuate a desired response. Examples of operating systems that may be used in a data processing system may include Microsoft Windows, Linux, UNIX, iOS, and Android operating systems. Also, examples of data stores include data files, data tables, relational database (e.g., Oracle, Microsoft SQL Server), database servers, or any other structure and/or device that is capable of storing data, which is retrievable by a processor.

The communication controllers 1012 may be connected to the network 1014 (not a part of data processing system 1000), which can be any public or private data processing system network or combination of networks, as known to those of skill in the art, including the Internet. Data processing system 1000 can communicate over the network 1014 with one or more other data processing systems such as a server 1034 (also not part of the data processing system 1000). However, an alternative data processing system may correspond to a plurality of data processing systems implemented as part of a distributed system in which processors associated with several data processing systems may be in communication by way of one or more network connections and may collectively perform tasks described as being performed by a single data processing system. Thus, it is to be understood that when referring to a data processing system, such a system may be implemented across several data processing systems organized in a distributed system in communication with each other via a network.

Further, the term "controller" means any device, system or part thereof that controls at least one operation, whether such a device is implemented in hardware, firmware, software or some combination of at least two of the same. It should be noted that the functionality associated with any particular controller may be centralized or distributed, whether locally or remotely.

In addition, it should be appreciated that data processing systems may be implemented as virtual machines in a virtual machine architecture or cloud environment. For example, the processor 1002 and associated components may correspond to a virtual machine executing in a virtual machine environment of one or more servers. Examples of virtual machine architectures include VMware ESCi, Microsoft Hyper-V, Xen, and KVM.

Those of ordinary skill in the art will appreciate that the hardware depicted for the data processing system 1000 may vary for particular implementations. For example, the data processing system 1000 in this example may correspond to a computer, workstation, server, PC, notebook computer, tablet, mobile phone, and/or any other type of apparatus/system that is operative to process data and carry out functionality and features described herein associated with the operation of a data processing system, computer, processor, and/or a controller discussed herein. The depicted example is provided for the purpose of explanation only and is not meant to imply architectural limitations with respect to the present disclosure.

Also, it should be noted that the processor 104 described herein may be located in a server that is remote from the display and input devices described herein. In such an example, the described display device and input device may be included in a client device that communicates with the server (and/or a virtual machine executing on the server) through a wired or wireless network (which may include the Internet). In some embodiments, such a client device, for example, may execute a remote desktop application or may correspond to a portal device that carries out a remote desktop protocol with the server to send inputs from an input device to the server and receive visual information from the server to display through a display device. Examples of such remote desktop protocols include Teradici's PCoIP, Microsoft's RDP, and the RFB protocol. In such examples, the processor described herein may correspond to a virtual processor of a virtual machine executing in a physical processor of the server.

As used herein, the terms "component" and "system" are intended to encompass hardware, software, or a combination of hardware and software. Thus, for example, a system or component may be a process, a process executing on a processor, or a processor. Additionally, a component or system may be localized on a single device or distributed across several devices.

Also, as used herein, the term 'processor' corresponds to any electronic device that is configured via hardware circuits, software, and/or firmware to process data. For example, processors described herein may correspond to one or more (or a combination) microprocessors, CPU, FPGA, ASIC, or any other integrated circuit (IC) or other type of circuit that is capable of processing data in a data processing system, which may have the form of a controller board, computer, server, mobile phone, and/or any other type of electronic device.

Those skilled in the art will recognize that, for simplicity and clarity, the full structure and operation of all data processing systems suitable for use with the present disclosure is not being depicted or described herein. Instead, only so much of a data processing system 1000 as is unique to the present disclosure or necessary for an understanding of the present disclosure is depicted and described. The remainder of the construction and operation of data processing system 1000 may conform to any of the various current implementations and practices known in the art.

Also, it should be understood that the words or phrases used herein should be construed broadly, unless expressly limited in some examples. For example, the terms "include" and "comprise," as well as derivatives thereof, mean inclusion without limitation. The singular forms "a", "an" and "the" are intended to include the plural forms as well, unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like.

Also, although the terms "first", "second", "third" and so forth may be used herein to describe various elements, functions, or acts, these elements, functions, or acts should not be limited by these terms. Rather these numeral adjectives are used to distinguish different elements, functions or acts from each other. For example, a first element, function, or act could be termed a second element, function, or act, and, similarly, a second element, function, or act could be termed a first element, function, or act, without departing from the scope of the present disclosure.

In addition, phrases such as "processor is configured to" carry out one or more functions or processes, may mean the processor is operatively configured to or operably configured to carry out the functions or processes via software, firmware, and/or wired circuits. For example, a processor that is configured to carry out a function/process may correspond to a processor that is executing the software/firmware, which is programmed to cause the processor to carry out the function/process and/or may correspond to a processor that has the software/firmware in a memory or storage device that is available to be executed by the processor to carry out the function/process. It should also be noted that a processor that is "configured to" carry out one or more functions or processes, may also correspond to a processor circuit particularly fabricated or "wired" to carry out the functions or processes (e.g., an ASIC or FPGA design). Further the phrase "at least one" before an element (e.g., a processor) that is configured to carry out more than one function may correspond to one or more elements (e.g., processors) that each carry out the functions and may also correspond to two or more of the elements (e.g., processors) that respectively carry out different ones of the one or more different functions.

Although an exemplary embodiment of the present disclosure has been described in detail, those skilled in the art will understand that various changes, substitutions, variations, and improvements disclosed herein may be made without departing from the scope of the disclosure in its broadest form.

None of the description in the present patent document should be read as implying that any particular element, step, act, or function is an essential element, which must be included in the claim scope: the scope of patented subject matter is defined only by the allowed claims.

### List of reference numerals

- 100: computer system
- 102: simulation modelling platform
- 104: processor
- 106: artifact management module
- 108: memory
- 110: workspace
- 112: input device
- 114: display device
- 116: GUI
- 118: simulation modelling UI
- 120: recommendation UI
- 122: first workspace
- 124: data store
- 126: graph database
- 128: second workspace
- 160: computer-readable medium
- 162: computer program product
- 1000: data processing system
- 1002: processor
- 1004: bridges/controllers/buses
- 1006: memory
- 1008: graphics controller
- 1010: display devices
- 1012: communication controllers
- 1014: networks
- 1016: I/O controllers
- 1018: input devices
- 1020: output devices
- 1022: peripheral hardware
- 1024: storage controllers
- 1026: storage device
- 1028: operating system
- 1030: software/firmware
- 1032: data stores
- 1034: server

## Claims

1. A computer-implemented method for managing simulation artifacts, the method comprising:
parsing, by a processor (104), at least one first workspace (122) associated with simulation of at least one first product to generate one or more first simulation artifacts corresponding to the at least one first product;
generating, by the processor (104), at least one knowledge graph (302) by mapping the one or more first simulation artifacts corresponding to the at least one first product to a predetermined ontology model; and
storing the generated the at least one knowledge graph in a graph database (126);
capturing, by the processor (104), a user's intent to modify at least one second simulation artifact in a second workspace (128) based on interaction of the user with a simulation modelling user interface (118), wherein the second workspace (128) is associated with simulation of a second product;
determining, by the processor (104), whether the at least one second simulation artifact is contextually similar to at least one first simulation artifact present in the at least one knowledge graph (302) stored in the graph database (126);
if the at least one second simulation artifact is contextually similar to at least one first simulation artifact present in the at least one knowledge graph:
generating, by the processor (104), one or more recommendations (255) for modifying the at least one second simulation artifact based on one or more properties of the contextually similar first simulation artifact; and displaying, by the processor (104), the one or more recommendations (255) on the simulation modelling user interface (118).

2. The method according to claim 1, wherein parsing the at least one first workspace (122) associated with simulation of the at least one first product to generate the one or more first simulation artifacts corresponding to the at least one first product, comprises:
parsing, by the processor (104), one or more source files obtained from a set of source files, stored in the at least one first workspace.

3. The method according to claims 1 and 2, wherein the set of source files comprise design files, data files, simulation files, simulation output files, finite element mesh files and Product Lifecycle Management files associated with the at least one first product.

4. The method according to claim 1, wherein generating the at least one knowledge graph (302) by mapping the one or more first simulation artifacts to the predetermined ontology model, further comprises:
using, by the processor (104), a predefined library to generate triples based on relationships between the mapped first simulated artifacts in the ontology model; and
generating, by the processor (104), the at least one knowledge graph based on the triples computed.

5. The method according to claim 1 or 4, wherein the generated at least one knowledge graph (302) comprises at least one first hierarchy subgraph indicative of a hierarchical representation of the first workspace (122).

6. The method according to claims 1 and 5, wherein the generated at least one knowledge graph (302) comprises at least one first interaction subgraph indicative of interactions between one or more components of the at least one first product.

7. The method according to claims 1 and 6, wherein determining whether the at least one second simulation artifact is contextually similar to at least one first simulation artifact present in the at least one knowledge graph (302) comprises:
parsing, by the processor (104), the second workspace (128) to generate a second hierarchy subgraph and a second interaction subgraph;
applying, by the processor (104), a vectorization function to generate a hierarchy embedding corresponding to the second hierarchy subgraph, and an interaction embedding corresponding to the second interaction subgraph; and
comparing, by the processor (104), the hierarchy embedding and the interaction embedding respectively to embeddings of the at least one first hierarchy subgraph and the at least one first interaction subgraph, using a similarity checking algorithm.

8. The method according to claim 1, wherein generating the one or more recommendations (255) for modifying the at least one second simulation artifact based on one or more properties of the contextually similar first simulation artifact, comprises:
identifying, by the processor (104), from the at least one knowledge graph, one or more first simulation artifacts dependent on the contextually similar first simulation artifact;
determining, by the processor (104), a cohesion value for a relationship between the contextually similar first simulation artifact to each of the one or more dependent first simulation artifacts based on at least one of a context and a source associated with the dependent first simulation artifact; and
generating, by the processor (104), the one or more recommendations (255) based on the relationship between the at least one first simulation artifact to each of the one or more dependent first simulation artifacts, and the cohesion value associated with the relationship.

9. The method according to claim 1, wherein the one or more recommendations (255) for modifying the at least one second simulation artifact comprises at least one of user-defined annotations, functions and expressions corresponding to the contextually similar first simulation artifact.

10. The method according to claim 1, wherein displaying the one or more recommendations (255) on the simulation modelling user interface comprises:
rendering, by the processor (104), a dynamic representation of at least one portion of the at least one knowledge graph (302) highlighting a dependency between the contextually similar first simulation artifact and the one or more dependent first simulation artifacts; and
overlaying, by the processor (104), the one or more recommendations (255) corresponding to the dependency between the contextually similar first simulation artifact and the one or more dependent first simulation artifacts over the dynamic representation of the at least one portion of the at least one knowledge graph.

11. The method according to claim 1, further comprising:
capturing, by the processor (104), the user's intent to search for at least one of the first simulations artifacts based on interactions of the user with the simulation modelling user interface (118);
querying the at least one knowledge graph (302) based on the user's intent; generating, by the processor (104), an output based on querying of the at least one knowledge graph; and
displaying, by the processor (104), the generated output via the simulation modelling user interface (118) to the user, wherein the generated output indicates the respective, searched first simulation artifact or the relationship of the respective, searched first simulation artifact to corresponding one or more dependent first simulation artifacts.

12. The method according to claim 11, further comprising:
capturing, by the processor (104), the user's intent to import the respective, searched first simulation artifact to the second workspace (128) based on interaction of the user with the simulation modelling user interface (118); and
importing, by the processor (104), the respective, searched first simulation artifact, in response to the captured user's intent, to the second workspace (128).

13. A computer system (100) arranged and configured to execute the steps of the computer-implemented method according to any one of the preceding claims 1 to 12.

14. A computer program product (162), comprising computer program code which, when executed by a computer system (100), cause the computer system (100) to carry out the method of one of the claims 1 to 12.

15. A computer-readable medium (160) comprising a computer program product (162) comprising computer program code which, when executed by a computer system (100), cause the computer system (100) to carry out the method of one of the claims 1 to 12.
